# EUROPEAN PATENT APPLICATION

(11) **EP 4 485 640 A1**
(43) Date of publication of application: **01.01.2025**
(21) Application number: 23762861.5
(22) Date of filing: 28.02.2023
(51) Int. Cl.: H01M 50/15, H01M 50/342, H01M 50/588

(54) **BATTERY CELL END COVER, END COVER ASSEMBLY, BATTERY CELL, BATTERY, AND ELECTRICAL APPARATUS**

(30) Priority: 04.03.2022 CN 202220473773 U
(71) Applicant: Contemporary Amperex Technology Co., Limited, Ningde, Fujian 352100 (CN)
(72) Inventor: CHEN, Xiaobo, Ningde, Fujian 352100 (CN); GU, Mingguang, Ningde, Fujian 352100 (CN)
(74) Representative: Laufhütte, Dieter
(86) International application number: PCT/CN2023/078676
(87) International publication number: WO 2023/165462

(57) **Abstract**

This application provides an end cover of a battery cell, an end cover assembly, a battery cell, a battery, and an electric apparatus. The end cover of the battery cell includes a through hole and a pressure relief structure, where the through hole is used for disposing an electrode terminal. A first weak portion of the pressure relief structure is configured as an arc, and a curvature center of the first weak portion is located on a side farther away from the through hole, so that when the first weak portion cracks, the pressure relief structure enclosed by the arc-shaped first weak portion folds toward the curvature center of the first weak portion under stress to move away from the electrode terminal. This reduces the risk of the pressure relief structure enclosed by the first weak portion overlapping with the electrode terminal, reduces the probability of the pressure relief mechanism coming into contact with the electrode terminal, and helps to improve the safety performance of the battery.

## Description

### CROSS-REFERENCE TO RELATED APPLICATIONS

This application claims priority to Chinese Patent Application No. 202220473773.1, filed on March 04, 2022 and entitled "END COVER OF BATTERY CELL, END COVER ASSEMBLY, BATTERY CELL, BATTERY, AND ELECTRIC APPARATUS", which is incorporated herein by reference in its entirety.

### TECHNICAL FIELD

This application relates to the field of electrochemical apparatus technologies, and in particular, to an end cover of a battery cell, an end cover assembly, a battery cell, a battery, and an electric apparatus.

### BACKGROUND

Batteries, with advantages such as high specific energy and high power density, are widely used in electronic devices such as mobile phones, notebook computers, electric bicycles, electric vehicles, electric airplanes, electric ships, electric toy cars, electric toy ships, electric toy airplanes, and electric tools.

In the development of battery technology, lithium-ion batteries have been widely used due to their advantages such as high energy density, high output power, long cycle life, and low environmental pollution. Currently, in addition to battery energy density improvement, safety performance is another non-negligible issue. If the safety of a battery cannot be guaranteed, the battery cannot be used. Therefore, how the safety of batteries is improved is a technical problem that needs to be urgently solved in battery technology.

### SUMMARY

In view of the above problems, this application provides a lifting apparatus, a lifting function module, and a battery swapping station, so as to reduce wear and damage to a chassis of the electric apparatus during a lifting process.

According to an aspect, this application provides an end cover of a battery cell. The end cover of the battery cell includes a through hole and a pressure relief structure. The through hole is used for installing an electrode terminal of the battery cell. The pressure relief structure is provided with a first weak portion, the first weak portion is configured as an arc, a curvature center of the first weak portion is located on a side of the first weak portion farther away from the through hole, and the pressure relief structure is configured to crack along the first weak portion when an internal pressure of the battery cell reaches a threshold, so that at least a portion of the pressure relief structure folds toward a side facing away from the through hole to relieve the internal pressure.

In technical solutions of embodiments of this application, when the first weak portion cracks, the pressure relief structure enclosed by the arc-shaped first weak portion folds toward the curvature center of the first weak portion under stress to move away from the electrode terminal. This reduces the risk of the pressure relief structure enclosed by the first weak portion overlapping with the electrode terminal, reduces the probability of the pressure relief mechanism coming into contact with the electrode terminal, and helps to improve the safety performance of a battery.

According to an embodiment of this application, the pressure relief structure is further provided with a rotating shaft portion, the rotating shaft portion is located on the side of the first weak portion farther away from the through hole, and at least a portion of the pressure relief structure can fold with the rotating shaft portion as an axis. The rotating shaft portion is provided, so that a closed contour area enclosed by the rotating shaft portion and the first weak portion in the pressure relief structure can flip with the rotating shaft portion as an axis, helping persons skilled in the art to mark a flipping area in the pressure relief structure, and facilitating the arrangement of the pressure relief structure.

According to an embodiment of this application, thickness of the first weak portion is less than that of the rest of the end cover, making a portion of the end cover most prone to cracking be the first weak portion.

According to an embodiment of this application, thickness of the rotating shaft portion is between the thickness of the first weak portion and thickness of the rest of the pressure relief structure, making the strength of the rotating shaft portion lower than that of the rest of the pressure relief structure, and making the pressure relief structure enclosed by the closed contour easily flip when flipping with the rotating shaft portion as an axis.

According to an embodiment of this application, the pressure relief structure is further provided with two second weak portions, the two second weak portions are respectively disposed at two ends of the first weak portion, and the two second weak portions are both connected between the first weak portion and the rotating shaft portion; and the second weak portions, the rotating shaft portion, and the first weak portion are connected to form a closed contour.

With the second weak portions provided, the second weak portions are connected between the first weak portion and the rotating shaft portion to form the closed contour; and the second weak portions, the first weak portion, and the rotating shaft portion together form a flipping portion of the pressure relief structure.

According to an embodiment of this application, the rotating shaft portion is provided with a first groove, and the first groove is provided on a side of the pressure relief structure closer to the interior of the battery cell, which can open a gap for the flipping of the pressure relief structure enclosed by the closed contour, further reducing the flipping difficulty of the pressure relief structure enclosed by the closed contour.

According to an embodiment of this application, the first weak portion is provided with a second groove, and the second groove is provided on a side of the pressure relief structure farther away from the interior of the battery cell, helping the first weak portion to crack more easily.

According to an embodiment of this application, the first groove and the second groove are each configured as a V-shaped groove. Since the bottom of the V-shaped groove is sharp, the V-shaped groove has a stress that causes downward cracking, which significantly reduces the strength of a position where the V-shaped groove is located, effectively reducing the strength of the rotating shaft portion and the first weak portion.

According to an embodiment of this application, the through hole is provided in two, and the pressure relief structure is symmetrically arranged along a perpendicular bisector of a line connecting the centers of the two through holes, which not only facilitates the positioning of the pressure relief structure on the end cover, but also facilitates the processing and forming of the pressure relief structure.

According to an embodiment of this application, the perpendicular bisector passes through the center of the end cover, which can help to determine the position of the through hole and facilitate the processing and manufacturing of the through hole in the end cover.

According to an embodiment of this application, a central angle corresponding to the first weak portion is less than or equal to 180°, which can ensure that the first weak portion is located on the same side of the two through holes, avoiding the situation where the first weak portion is too large or crosses the line connecting the centers of the two through holes for other reasons, and helping to determine the arrangement position of the first weak portion.

According to an embodiment of this application, the end cover is provided with a recess, and the pressure relief structure is disposed at the bottom of the recess. The provision of the recess can reduce thickness at this position. The disposition of the pressure relief structure at the bottom of the recess makes an area where the pressure relief structure is located have a small thickness and be more prone to cracking, helping to achieve the functions of the pressure relief mechanism in exhausting gas and relieving pressure.

According to an embodiment of this application, the recess includes a recessed step, and the recessed step is arranged along a side wall of the recess. The recessed step can avoid the processing difficulty of the recess due to an excessive depth, helping to improve the processing convenience of the recess.

According to another aspect, this application provides an end cover assembly including the end cover provided by any one of the above technical solutions and an electrode terminal, where the electrode terminal penetrates through the through hole.

According to another aspect, this application provides a battery cell including the end cover assembly provided by the above technical solution and a housing, where one end of the housing is provided with an opening, and the end cover assembly covers the opening.

According to another aspect, this application provides a battery including the battery cell provided by the above technical solution.

According to another aspect, this application provides an electric apparatus including the battery provided by the above technical solution, where the battery is used to supply electrical energy.

The technical solutions provided by the embodiments of this disclosure bring at least the following beneficial effects:

This application provides an end cover of a battery cell. The end cover of the battery cell includes a through hole and a pressure relief structure. The through hole is used for disposing an electrode terminal. The first weak portion of the pressure relief structure is configured as an arc, and a curvature center of the first weak portion is located on the side farther away from the through hole, so that when the first weak portion cracks, the pressure relief structure enclosed by the arc-shaped first weak portion folds toward the curvature center of the first weak portion under stress to move away from the electrode terminal. This reduces the risk of the pressure relief structure enclosed by the first weak portion overlapping with the electrode terminal, reduces the probability of the pressure relief mechanism coming into contact with the electrode terminal, and helps to improve the safety performance of a battery.

This application provides an end cover assembly. Since the end cover assembly includes the end cover provided by the above technical solution, the end cover assembly can reduce the probability of the pressure relief mechanism coming into contact with the electrode terminal, helping to improve the safety performance of a battery.

This application provides a battery cell. Since the battery cell includes the end cover assembly provided by the above technical solution, the battery cell has high safety.

This application provides a battery. Since the battery includes the battery cell provided by the above technical solution, the battery has high safety.

This application provides an electric apparatus. Since the electric apparatus includes the battery provided by the above technical solution, the electric apparatus has high safety.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is a schematic structural exploded view of a battery cell according to some embodiments of this application;
FIG. 4 is a schematic structural diagram of an end cover from a first perspective according to some embodiments of this application;
FIG. 5 is a schematic structural diagram of an end cover from a second perspective according to some embodiments of this application;
FIG. 6 is a cross-sectional view of an end cover according to some embodiments of this application; and
FIG. 7 is an enlarged view of position A in FIG. 6.

Reference signs in specific embodiments are described as follows:
1000. vehicle;
100. battery; 200. controller; 300. motor;
10. box; 11. first portion; 12. second portion;
20. battery cell; 21. end cover; 21a. electrode terminal; 22. housing; 23. cell assembly; 23a. tab;
211. through hole; 212. pressure relief structure; 2121. first weak portion; 2122. rotating shaft portion; 2123. second weak portion; 213. recess; and 2131. recessed step.

### DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. It is explicitly or implicitly understood by persons skilled in the art that the embodiments described in this application may be combined with other embodiments.

The orientation terms appearing in the following description all refer to directions shown in the figures, and do not limit the specific structure of this application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

Currently, from the perspective of market development, application of batteries is being more extensive. Batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of batteries, market demands for traction batteries are also increasing.

In the related art, an end cover of a battery cell is typically provided with a pressure relief mechanism. When an internal pressure of the battery cell reaches a threshold, the pressure relief mechanism can be opened to relieve the internal pressure of the battery cell, ensuring that the internal pressure of the battery cell is within a preset range, thereby ensuring the safety of the battery cell. Typically, the pressure relief mechanism is formed by providing a groove on the end cover to form a weak portion on the end cover. When the internal pressure of the battery cell reaches the threshold, the groove cracks, and a portion of the end cover folds to open the pressure relief mechanism for relieving pressure. This pressure relief mechanism can keep the internal pressure of the battery cell within the preset range, prevent the internal pressure of the battery cell from being too high, reduce the risk of the battery cell exploding, and help to improve the safety of the battery cell.

The applicant has noted that in the pressure relief structure provided on the battery cell by forming a groove, when the pressure relief mechanism is opened, a portion of the end cover folds in a direction approaching the electrode terminal, posing the risk of the end cover overlapping with the electrode terminal and causing short circuit in the battery cell. This is not conducive to improving the safety of the battery cell.

To avoid short circuit in the battery cell, the applicant has found through research that the shape of the formed weak portion can be set such that the end cover cracking along the weak portion does not come into contact with the electrode terminal, thereby avoiding short circuit in the battery cell. Specifically, the weak portion of the pressure relief structure is configured as an arc, and a curvature center of the arc is located on a side of a first weak portion farther away from the electrode terminal. When the weak portion cracks, the flipping end cover folds toward a side facing away from the electrode terminal under stress.

Based on the above considerations, to avoid short circuit in the battery cell, the applicant has designed through in-depth research an end cover of a battery cell. A weak portion with a curvature center farther away from an electrode terminal is disposed in the end cover, so that the flipping end cover folds in a direction leaving the electrode terminal, thereby preventing the flipping end cover from coming into contact with the electrode terminal, avoiding the risk of the end cover causing short circuit in the battery cell, and helping to improve the safety of the battery cell.

The end cover of the battery cell disclosed in the embodiments of this application is used for an end of the battery cell, and the end cover can be provided with a pressure relief structure and an electrode terminal, so that the end cover can relieve an internal pressure of the battery cell and lead current outward for output through the electrode terminal. The end cover disclosed in the embodiments of this application may be used without limitation in rechargeable battery cells. A rechargeable battery cell refers to a battery that can continue to be used by activating an active substance through charging after the battery cell is discharged. The end cover disclosed in the embodiments of this application can effectively prevent the battery cell from short-circuiting and help to improve the safety of the battery cell.

An embodiment of this application provides a battery cell. The battery cell may be used without limitation in electric apparatuses such as vehicles, ships, or aircrafts. The battery cell, the battery, and the like disclosed in this application may be used to constitute a power supply system of that electric apparatus, which helps to improve the performance stability and service life of the battery.

An embodiment of this application provides an electric apparatus using a battery as its power source. The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, an electric apparatus according to an embodiment of this application being a vehicle 1000 is used as an example for description of the following embodiments.

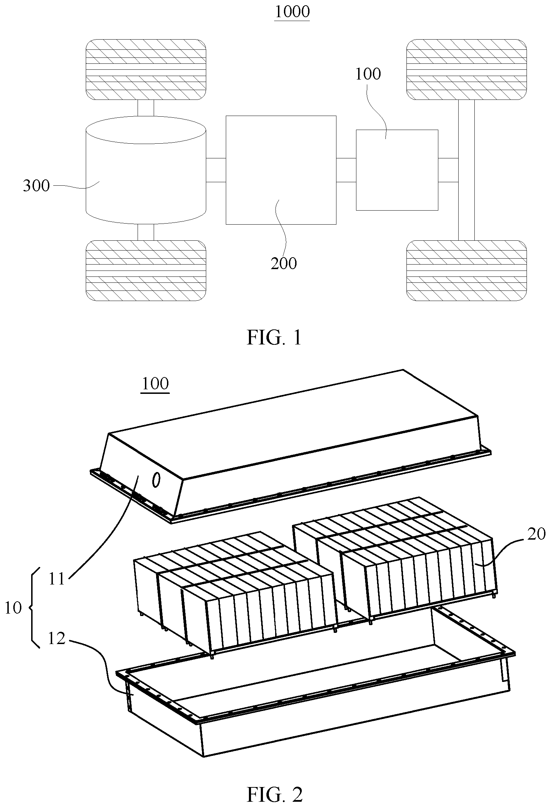

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Refer to FIG. 2. FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define an accommodating space for accommodating the battery cell 20. The second portion 12 may be a hollow structure with one end open, and the first portion 11 may be a plate structure, where the first portion 11 covers the open side of the second portion 12 so that the first portion 11 and the second portion 12 jointly define the accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

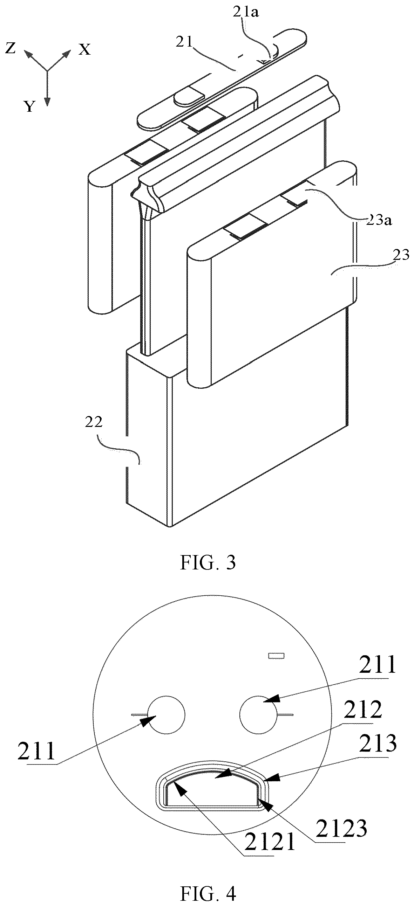

Refer to FIG. 3. FIG. 3 is a schematic structural exploded view of a battery cell 20 according to some embodiments of this application. The battery cell 20 refers to a smallest unit constituting a battery. As shown in FIG. 3, the battery cell 20 includes an end cover 21, a housing 22, a cell assembly 23, and other functional components.

The end cover 21 refers to a component that covers an opening of the housing 22 to isolate an internal environment of the battery cell 20 from an external environment. Without limitation, a shape of the end cover 21 may fit with that of the housing 22, so that the end cover 21 can match the housing 22. Optionally, the end cover 21 may be made of a material with certain hardness and strength (for example, aluminum alloy), so that the end cover 21 is less likely to deform when subjected to extrusion and collision, making the battery cell 20 have higher structural strength and enhanced safety performance. The end cover 21 may be provided with functional components such as an electrode terminal 21a. The electrode terminal 21a may be configured to be electrically connected to the cell assembly 23 for outputting or inputting electrical energy of the battery cell 20. In some embodiments, the end cover 21 may be further provided with a pressure relief mechanism for relieving internal pressure when an internal pressure or temperature of the battery cell 20 reaches a threshold. The end cover 21 may alternatively be made of various materials such as copper, iron, aluminum, stainless steel, aluminum alloy, and plastic. This is not particularly limited in the embodiments of this application. In some embodiments, an insulator may be further provided on an inner side of the end cover 21. The insulator may be configured to isolate an electrically connected component in the housing 22 from the end cover 21 to reduce the risk of short circuit. For example, the insulator may be made of plastic, rubber, or the like.

The housing 22 is an assembly configured to form the internal environment of the battery cell 20 together with the end cover 21, where the formed internal environment may be configured to accommodate the cell assembly 23, an electrolyte, and other components. The housing 22 and the end cover 21 may be independent components, and an opening may be provided in the housing 22, so that the end cover 21 can close the opening to form the internal environment of the battery cell 20. Without limitation, the end cover 21 and the housing 22 may alternatively be integrated. Specifically, the end cover 21 and the housing 22 may form a shared connection surface before other components are disposed inside the housing, and then the end cover 21 covers the housing 22 when inside of the housing 22 needs to be enclosed. The housing 22 may be of various shapes and sizes, for example, a rectangular shape, a cylindrical shape, and a hexagonal prism shape. Specifically, the shape of the housing 22 may be determined according to a specific shape and size of the cell assembly 23. The housing 22 may be made of various materials such as copper, iron, aluminum, stainless steel, aluminum alloy, and plastic. This is not particularly limited in the embodiments of this application.

The cell assembly 23 includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive electrode tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The negative electrode current collector includes a negative electrode coated area and a negative electrode tab connected to the negative electrode coated area. The negative electrode coated area is coated with the negative electrode active substance layer, and the negative electrode tab is coated with no negative electrode active substance layer. The negative electrode current collector may be made of copper, the negative electrode active substance layer includes a negative electrode active substance, and the negative electrode active substance may be carbon, silicon, or the like. The separator may be made of PP (polypropylene, polypropylene), PE (polyethylene, polyethylene), or the like. In addition, the cell assembly 23 may be a wound structure or a stacked structure, but the embodiments of this application are not limited thereto. The following current collectors can be applied to the positive electrode current collector or the negative electrode current collector. The portions of the positive electrode plate and the negative electrode plate with active substances constitute a body portion of the cell assembly, and the positive electrode tab and the negative electrode tab can be located together at one end of the body portion or both ends of the body portion respectively. During charge and discharge of the battery, the positive electrode active substance and the negative electrode active substance react with the electrolyte, and the tab 23a is electrically connected to the electrode terminal to lead out electrical energy.

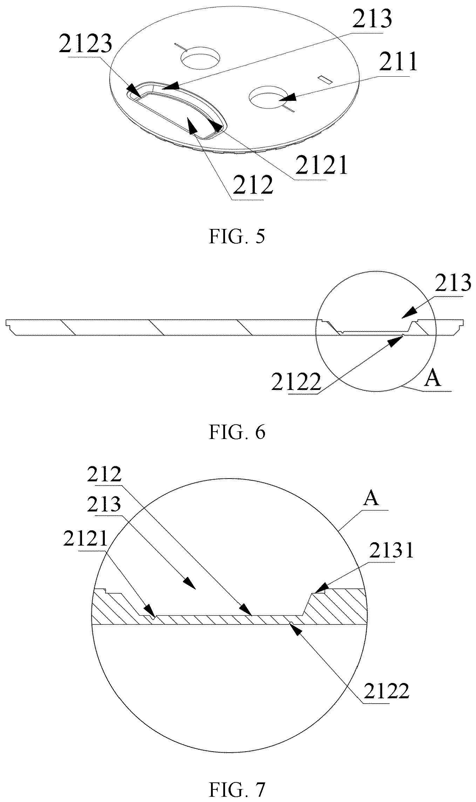

According to some embodiments of this application, FIG. 4 is a schematic structural diagram of an end cover from a first perspective according to some embodiments of this application, and FIG. 5 is a schematic structural diagram of an end cover from a second perspective according to some embodiments of this application. Some embodiments of this application provide an end cover 21 of a battery cell. The end cover 21 of the battery cell includes a pressure relief structure 212 and a through hole 211. The through hole 211 is used for installing an electrode terminal 21a of the battery cell. The pressure relief structure 212 is provided with a first weak portion 2121. The first weak portion 2121 is configured as an arc, and a curvature center of the first weak portion 2121 is located on a side of the first weak portion 2121 farther away from the through hole 211. The pressure relief structure 212 is configured to crack along the first weak portion 2121 when an internal pressure of the battery cell reaches a threshold, so that at least a portion of the pressure relief structure 212 folds toward a side facing away from the through hole 211 to relieve the internal pressure.

The through hole 211 is a hole running through the end cover 21 in a thickness direction, and the electrode terminal 21a of the battery cell penetrates through the through hole 211 to output the electrical energy of the battery cell.

The first weak portion 2121 is an area with lower strength in the pressure relief structure 212, and the strength of the first weak portion 2121 is lower than that of other portions of the end cover 21. When the internal pressure of the battery cell reaches the threshold, the first weak portion 2121 cracks to relieve pressure. In some embodiments of this application, the first weak portion 2121 may be made of materials with low strength, making the strength of the first weak portion 2121 lower than that of other portions of the end cover 21. Alternatively, some structures may be provided to weaken the strength of the pressure relief structure 212 at this position, so that the strength of the first weak portion 2121 is lower than that of other portions of the end cover 21. For example, a structure for removing materials is provided at the first weak portion 2121 to weaken the strength of the pressure relief structure 212 at this position. Through the above technical solutions, the first weak portion 2121 becomes a portion of the pressure relief structure 212 with strength lower than that of other portions of the end cover 21. When the internal pressure of the battery cell reaches the threshold, the end cover 21 of the battery cell cracks at the first weak portion 2121 of the pressure relief mechanism, but does not crack at other positions, so that the gas inside the battery cell is discharged through the first weak portion 2121, reducing the internal pressure of the battery cell and ensuring the safety of the battery cell.

"The first weak portion 2121 is configured as an arc" means that a shape of an area forming the first weak portion 2121 is an arc. A shape of the first weak portion 2121 may be a circular arc, an elliptical arc, or a spiral arc. A specific shape of the arc is not limited here. Persons skilled in the art can choose based on actual situations, as long as the curvature center of the first weak portion 2121 is located on the side of the first weak portion 2121 farther away from the through hole 211.

When the internal pressure of the battery cell reaches the threshold and causes the pressure relief structure 212 to crack along the first weak portion 2121, the pressure relief structure 212 enclosed by the arc-shaped first weak portion 2121 folds toward the curvature center of the first weak portion 2121 under stress. During this process, a portion of the pressure relief structure 212 enclosed by the first weak portion 2121 continuously moves away from the electrode terminal 21a. This reduces the risk of the pressure relief mechanism overlapping with the electrode terminal 21a, reduces the probability of the pressure relief mechanism coming into contact with the electrode terminal 21a, and helps to improve the safety performance of the battery 100.

In some embodiments of this application, as shown in FIG. 6 and FIG. 7, the pressure relief structure 212 is further provided with a rotating shaft portion 2122. The rotating shaft portion 2122 is located on the side of the first weak portion 2121 farther away from the through hole 211, and at least a portion of the pressure relief structure 212 can fold with the rotating shaft portion 2122 as an axis.

The rotating shaft portion 2122 refers to a junction of a folded part of the pressure relief structure 212 and an unfolded part of the pressure relief structure 212 when a portion of the pressure relief structure 212 folds. The folded part of the pressure relief structure 212 rotates with this junction as an axis. It should be noted that the rotating shaft portion 2122 is an area, in the pressure relief structure, where the first weak portion 2121 is not provided. When the internal pressure of the battery cell 20 reaches the threshold, the first weak portion 2121 cracks, but the rotating shaft portion 2122 does not crack. The rotating shaft portion 2122 can serve as a rotation axis of the folded part of the pressure relief structure 212.

"The rotating shaft portion 2122 is located on the side of the first weak portion 2121 farther away from the through hole 211" means that the rotating shaft portion 2122 and the through hole 211 are respectively provided on both sides of the first weak portion 2121. An area enclosed by a closed contour is an area of the folded part of the pressure relief structure 212, so that the pressure relief structure 212 can fold in a specified area (the area enclosed by the closed contour), facilitating the division of various areas in the pressure relief structure 212. In some embodiments, projections of the rotating shaft portion 2122 and the first weak portion 2121 on a side of the end cover 21 farther away from the cell assembly 23 are connected to form a closed contour, so that the pressure relief structure 212 enclosed by the closed contour can fold with the rotating shaft portion 2122 as an axis.

The rotating shaft portion 2122 is provided, so that an area enclosed by the rotating shaft portion 2122 and the first weak portion 2121 in the pressure relief structure 212 can flip, helping persons skilled in the art to mark a flipping area in the pressure relief structure 212, and facilitating the arrangement of the pressure relief structure 212.

In some embodiments of this application, thickness of the first weak portion 2121 is less than that of the rest of the end cover 21.

Setting the thickness of the first weak portion 2121 to be less than that of the rest of the end cover 21 makes the strength of the first weak portion 2121 lower than that of the rest of the end cover 21. In this way, it can be ensured that a portion of the end cover 21 most prone to cracking is the first weak portion 2121, so that as long as the pressure relief structure 212 cracks due to the internal pressure of the battery cell, the cracking position is located at the first weak portion 2121, facilitating the setting of the cracking position of the pressure relief structure 212. Moreover, weakening the strength of the structure to form the first weak portion 2121 by changing the thickness is easier to operate than weakening the strength of the structure to form the first weak portion 2121 by changing materials, which is conducive to reducing the processing cost of the first weak portion 2121.

In some embodiments of this application, thickness of the rotating shaft portion 2122 is between the thickness of the first weak portion 2121 and the thickness of the rest of the pressure relief structure 212.

That is, the thickness H2 of the rotating shaft portion 2122, the thickness H1 of the first weak portion 2121, and the thickness H3 of the rest of the pressure relief structure 212 have the following relationship: H1 < H2 < H3. Setting the thickness of the rotating shaft portion 2122 to be less than that of the rest of the pressure relief structure 212 makes the strength of the rotating shaft portion 2122 lower than that of the rest of the pressure relief structure 212, making the pressure relief structure 212 enclosed by the closed contour easily flip when flipping with the rotating shaft portion 2122 as an axis. In some embodiments, the thickness H2 of the rotating shaft portion 2122 and the thickness H1 of the first weak portion 2121 may alternatively be set to be equal, that is, H1 = H2. Since the first weak portion 2121 is configured as an arc and is closer to the electrode terminal 21a than the rotating shaft portion 2122, under the action of the internal pressure of the battery cell, the pressure relief structure 212 enclosed by the closed contour still cracks at the first weak portion 2121 and flips with the rotating shaft portion 2122 as an axis.

In some embodiments of this application, as shown in FIG. 4 and FIG. 5, the pressure relief structure 212 is further provided with two second weak portions 2123. The two second weak portions 2123 are respectively provided at two ends of the first weak portion 2121, and the two second weak portions 2123 are both connected between the first weak portion 2121 and the rotating shaft portion 2122. The second weak portions 2123, the rotating shaft portion 2122, and the first weak portion 2121 are connected to form a closed contour.

The second weak portions 2123 are areas with lower strength in the pressure relief structure 212, and the strength of the second weak portions 2123 is lower than that of other portions of the end cover 21. Specifically, the second weak portions 2123 and the first weak portion 2121 have the same thickness, making the second weak portions 2123 and the first weak portion 2121 have the same strength, and making the second weak portions 2123 and the first weak portion 2121 crack simultaneously.

With the second weak portions 2123 provided, the second weak portions 2123 are connected between the first weak portion 2121 and the rotating shaft portion 2122 to form the closed contour; and the second weak portions 2123, the first weak portion 2121, and the rotating shaft portion 2122 together form a flipping portion of the pressure relief structure 212.

In some embodiments of this application, as shown in FIG. 7, the rotating shaft portion 2122 is provided with a first groove, and the first groove is provided on a side of the pressure relief structure 212 closer to the interior of the battery cell.

The first groove refers to a groove formed by removing materials through mechanical processing in the rotating shaft portion 2122, reducing the strength at this position, and making the pressure relief structure 212 enclosed by the closed contour flip relatively easily at this position.

"A side closer to the interior of the battery cell" refers to a side of the pressure relief structure 212 closer to the cell assembly 23 in the battery cell.

Since the pressure relief structure 212 enclosed by the closed contour flips with the rotating shaft portion 2122 as an axis from the side closer to the interior of the battery cell to the outside, the first groove provided on the side of the pressure relief structure 212 closer to the interior of the battery cell can open a gap for the flipping of the pressure relief structure 212 enclosed by the closed contour, further reducing the flipping difficulty of the pressure relief structure 212 enclosed by the closed contour.

In some embodiments of this application, as shown in FIG. 7, the first weak portion 2121 is provided with a second groove, and the second groove is provided on a side of the pressure relief structure 212 farther away from the interior of the battery cell.

The second groove refers to a groove formed by removing materials through mechanical processing on the first weak portion 2121, reducing the strength at this position, and making the pressure relief structure 212 enclosed by the closed contour to crack relatively easily at this position. In some embodiments, the second weak portion 2123 is formed by providing a third groove. The third groove is also provided on the side of the pressure relief structure 212 farther away from the interior of the battery cell and is connected to the second groove, with the same structural parameters and dimensions as the second groove.

"The side farther away from the interior of the battery cell" refers to a side of the pressure relief structure 212 farther away from the cell assembly 23 in the battery cell.

Since the internal pressure of the battery cell directly acts on the side of the pressure relief structure 212 closer to the interior of the battery cell, the second groove provided on the side of the pressure relief structure 212 farther away from the interior of the battery cell makes a residual material of the first weak portion 2121 more easily stressed by the internal pressure of the battery cell, helping the first weak portion 2121 to crack more easily.

In some embodiments of this application, as shown in FIG. 7, the first groove and the second groove are each configured as a V-shaped groove.

The V-shaped groove refers to a groove with a V-shaped cross-section. In some embodiments, the first groove and the second groove may alternatively be configured as grooves of other shapes, such as U-shaped grooves and rectangular grooves. Persons skilled in the art can choose shapes of the grooves based on actual situations, as long as the grooves can remove materials and reduce the strength of positions where they are located.

Since the bottom of the V-shaped groove is sharp, the V-shaped groove has a stress that causes downward cracking, which significantly reduces the strength of a position where the V-shaped groove is located, effectively reducing the strength of the rotating shaft portion 2122 and the first weak portion 2121.

In some embodiments of this application, as shown in FIG. 4, the through hole 211 is provided in two, and the pressure relief structure 212 is symmetrically arranged along a perpendicular bisector of a line connecting the centers of the two through holes 211.

The two through holes 211 are used for respectively installing two electrode terminals 21a with opposite polarities, so that the two electrode terminals 21a with opposite polarities of the battery cell can both extend out of the battery cell from the end cover 21 to output electrical energy.

"A perpendicular bisector of a line connecting the centers of the two through holes 211" refers to a perpendicular bisector of a line segment formed with the centers of the two through holes 211 as endpoints. In some embodiments, the through hole 211 is configured as a circular hole and can be installed in cooperation with a pole serving as the electrode terminal 21a. It can be understood that the through hole 211 may alternatively be configured as a rectangular hole, a polygonal hole, or a special-shaped hole, as long as the through hole 211 can be installed in cooperation with the electrode terminal 21a. Persons skilled in the art can choose based on actual situations.

The pressure relief structure 212 is symmetrically arranged, which not only facilitates the positioning of the pressure relief structure 212 on the end cover 21, but also facilitates the processing and forming of the pressure relief structure 212.

In some embodiments of this application, the perpendicular bisector passes through the center of the end cover 21.

In some embodiments, a cross-sectional shape of the end cover 21 is set as a circle, and the center of the end cover 21 is the center of the circle. In some embodiments, the cross-sectional shape of the end cover 21 may alternatively be set as a rectangle or other shapes. Persons skilled in the art can choose based on actual situations, as long as the end cover 21 can hermetically cover one end of the battery cell.

The perpendicular bisector passing through the center of the end cover 21 can help to determine the position of the through hole 211 and facilitate the processing and manufacturing of the through hole 211 in the end cover 21.

In some embodiments of this application, a central angle corresponding to the first weak portion 2121 is less than or equal to 180°.

The central angle corresponding to the first weak portion 2121 refers to a central angle corresponding to a sector area where the entire first weak portion 2121 is located.

The central angle corresponding to the first weak portion 2121 being less than or equal to 180° can ensure that the first weak portion 2121 is located on the same sides of the two through holes 211, avoiding the situation where the first weak portion 2121 is too large or crosses the line connecting the centers of the two through holes 211 for other reasons, and helping to determine the arrangement position of the first weak portion 2121.

In some embodiments of this application, as shown in FIG. 5, the end cover 21 is provided with a recess 213, and the pressure relief structure 212 is disposed at the bottom of the recess 213.

The recess 213 is provided on a side of the end cover 21 farther away from the interior of the battery cell and is formed by forming a recessed area on the end cover 21. The recess 213 can be formed by removing materials on the end cover 21 through processing methods such as turning, milling, planing, and grinding; or when the end cover 21 is processed and formed, the recess 213 can be integrally formed with the end cover 21 through processing methods such as stamping, casting, and rolling. Persons skilled in the art can choose based on actual situations.

The bottom of the recess 213 is the deepest plane in the recess 213 along a thickness direction of the end cover 21.

The provision of the recess 213 can reduce the thickness at this position. The disposition of the pressure relief structure 212 at the bottom of the recess 213 makes an area where the pressure relief structure 212 is located have a small thickness and be more prone to cracking, helping to achieve the functions of the pressure relief mechanism in exhausting gas and relieving pressure.

In some embodiments of this application, as shown in FIG. 7, the recess 213 includes a recessed step 2131, and the recessed step 2131 is arranged along a side wall of the recess 213.

The recessed step 2131 refers to a step provided on the side wall of the recess 213, making the recess 213 recessed like a stepped recess. In some embodiments, a side wall surface of the recessed step 2131 is arranged at an obtuse angle to the plane of the bottom of the recess 213. That is, a slope is provided on the side wall of the recessed step 2131, making the recess 213 trumpet-shaped with an outward opening, facilitating the processing of the pressure relief structure 212 at the bottom of the recess 213. In some embodiments, the recessed step 2131 may be provided in one, two, or plurality, facilitating the processing and forming of the recess 213.

The recessed step 2131 can avoid the processing difficulty of the recess 213 due to an excessive depth, helping to improve the processing convenience of the recess 213.

In some embodiments of this application, this application further provides an end cover assembly. The end cover assembly includes the end cover 21 provided by any one of the above solutions and an electrode terminal 21a, where the electrode terminal 21a passes through the through hole 211.

Since the end cover assembly includes the end cover 21 provided by the above technical solution, the end cover assembly can reduce the probability of the pressure relief mechanism coming into contact with the electrode terminal 21a, helping to improve the safety performance of the battery 100.

In some embodiments of this application, this application further provides a battery cell. The battery cell includes the end cover assembly provided by the above technical solution and a housing 22, where one end of the housing 22 is provided with an opening, and the end cover assembly covers the opening.

The opening provided at one end of the housing 22 is used for installing the cell assembly 23 of the battery cell into the housing 22. The end cover assembly covering the opening means that the end cover assembly is connected to the opening to separate the interior of the housing 22 from the outside. In some embodiments, the end cover assembly is hermetically connected to the opening, which can prevent a substance inside the housing 22 from leaking.

In some embodiments of this application, this application further provides a battery 100. The battery 100 includes the battery cell provided by the above solution.

In some embodiments of this application, this application further provides an electric apparatus including the battery 100 provided by any one of the above solutions, and the battery 100 is used to supply electrical energy to the electric apparatus.

The electric apparatus may be any one of the foregoing devices or systems using a battery.

According to some embodiments of this application, as shown in FIG. 4 and FIG. 5, this application provides an end cover 21 of a battery cell, where the end cover 21 of the battery cell includes a pressure relief structure 212 and two through holes 211. The end cover 21 is provided with a recess 213. As shown in FIG. 7, a recessed step 2131 is provided on a side wall of the recess 213. The pressure relief structure 212 is disposed on a bottom surface of the recess 213. The pressure relief structure 212 is provided with a closed contour formed by a first weak portion 2121, two second weak portions 2123, and a rotating shaft portion 2122. The first weak portion 2121 is configured as an arc, and a curvature center of the first weak portion 2121 is located on a side of the first weak portion 2121 farther away from the through hole 211, so that when an internal pressure of the battery cell reaches a threshold and the first weak portion 2121 cracks, the pressure relief structure 212 in the closed contour folds with the rotating shaft portion 2122 as an axis toward a side facing away from the through hole 211, and relieves the internal pressure of the battery cell. A second groove in the first weak portion 2121 and a third groove in the second weak portion 2123 are provided on a side of the pressure relief structure 212 farther away from the interior of the battery cell, and a first groove in the rotating shaft portion 2122 is provided on a side of the pressure relief structure 212 closer to the interior of the battery cell. The thickness of the first weak portion 2121 is less than or equal to that of the rotating shaft portion 2122, making the pressure relief structure 212 in the closed contour crack along the first weak portion 2121 and fold with the rotating shaft portion 2122 as an axis toward the side facing away from the through hole 211.

Although this application has been described with reference to the preferred embodiments, various modifications to this application and replacements of the components therein with equivalents can be made without departing from the scope of this application. In particular, as long as there is no structural conflict, the various technical features mentioned in the implementations can be combined in any manners. This application is not limited to the specific embodiments disclosed in this specification but includes all technical solutions falling within the scope of the claims.

## Claims

1. An end cover of a battery cell, comprising:
a through hole used for installing an electrode terminal of the battery cell; and
a pressure relief structure provided with a first weak portion, wherein the first weak portion is configured as an arc, a curvature center of the first weak portion is located on a side of the first weak portion farther away from the through hole, and the pressure relief structure is configured to crack along the first weak portion when an internal pressure of the battery cell reaches a threshold, so that at least a portion of the pressure relief structure folds toward a side facing away from the through hole to relieve the internal pressure.

2. The end cover according to claim 1, wherein thickness of the first weak portion is less than that of the rest of the end cover.

3. The end cover according to claim 1 or 2, wherein the pressure relief structure is further provided with a rotating shaft portion, the rotating shaft portion is located on the side of the first weak portion farther away from the through hole, and at least a portion of the pressure relief structure is able to fold with the rotating shaft portion as an axis.

4. The end cover according to claim 3, wherein thickness of the rotating shaft portion is between the thickness of the first weak portion and thickness of the rest of the pressure relief structure.

5. The end cover according to claim 3 or 4, wherein the pressure relief structure is further provided with two second weak portions, the two second weak portions are respectively disposed at two ends of the first weak portion, and the two second weak portions are both connected between the first weak portion and the rotating shaft portion; and the second weak portions, the rotating shaft portion, and the first weak portion are connected to form a closed contour.

6. The end cover according to any one of claims 3 to 5, wherein the rotating shaft portion is provided with a first groove, and the first groove is provided on a side of the pressure relief structure closer to the interior of the battery cell.

7. The end cover according to claim 6, wherein the first weak portion is provided with a second groove, and the second groove is provided on a side of the pressure relief structure farther away from the interior of the battery cell.

8. The end cover according to claim 7, wherein the first groove and the second groove are each configured as a V-shaped groove.

9. The end cover according to any one of claims 1 to 8, wherein the through hole is provided in two, and the pressure relief structure is symmetrically arranged along a perpendicular bisector of a line connecting the centers of the two through holes.

10. The end cover according to claim 9, wherein the perpendicular bisector passes through the center of the end cover.

11. The end cover according to any one of claims 1 to 10, wherein a central angle corresponding to the first weak portion is less than or equal to 180°.

12. The end cover according to any one of claims 1 to 10, wherein the end cover is provided with a recess, and the pressure relief structure is disposed at the bottom of the recess.

13. The end cover according to claim 12, wherein the recess comprises a recessed step, and the recessed step is arranged along a side wall of the recess.

14. An end cover assembly, comprising:
the end cover according to any one of claims 1 to 13; and
an electrode terminal, the electrode terminal passing through the through hole.

15. A battery cell, comprising:
the end cover assembly according to claim 14; and
a housing, wherein one end of the housing is provided with an opening, and the end cover assembly covers the opening.

16. A battery, comprising the battery cell according to claim 15.

17. An electric apparatus, comprising the battery according to claim 16, wherein the battery is configured to supply electrical energy.
